**Europäisches Patentamt**

**European Patent Office**

**Office européen des brevets**

(19)

(11) Veröffentlichungsnummer: **0 053 403**
**B1**

(12) # EUROPÄISCHE PATENTSCHRIFT

(45) Veröffentlichungstag der Patentschrift:
**27.06.84**

(21) Anmeldenummer: **81201108.8**

(22) Anmeldetag: **06.10.81**

(51) Int. Cl.³: **F 24 F 7/08**, F 24 D 5/00,
F 24 D 9/00

(54) **Lüftungs- und Heizeinrichtung für Einzelräume u. dgl.**

(30) Priorität: **27.11.80 DE 3044691**

(43) Veröffentlichungstag der Anmeldung:
**09.06.82 Patentblatt 82/23**

(45) Bekanntmachung des Hinweises auf die Patenterteilung:
**27.06.84 Patentblatt 84/26**

(84) Benannte Vertragsstaaten:
**FR GB IT**

(56) Entgegenhaltungen:
**DE - A - 2 843 813**
**DE - U - 7 802 868**
**FR - A - 2 344 795**
**US - A - 4 228 849**

(73) Patentinhaber: **Kernforschungsanlage Jülich Gesellschaft mit beschränkter Haftung, Postfach 1913, D-5170 Jülich (DE)**

(72) Erfinder: **Förster, Siegfried, Dr., Ottenfeld 1, D-5110 Alsdorf (DE)**
Erfinder: **Quell, Peter, Dr., Birkenweg 23, D-5100 Aachen (DE)**

(74) Vertreter: **Ackmann, Günther, Dr.-Ing., Claubergstrasse 24 Postfach 10 09 22, D-4100 Duisburg 1 (DE)**

EP 0 053 403 B1

**Beschreibung**

Die Erfindung betrifft eine Lüftungs- und Heizeinrichtung für Einzelräume u. dgl., bestehend aus einem mit gasförmigen oder flüssigen Brennstoffen beheizten Brenner und einem oder mehreren von Heizwasser und/oder Brauchwasser durchflossenen Wärmetauschern, wobei die Heißgase des Brenners über eine mit einem Abgasgebläse versehene Abgasleitung ins Freie geführt werden und in der Abgasleitung hinter den Wärmeaustauschern ein Frischluft-Wärmeaustauscher angeordnet ist, an den eine in den Einzelraum mündende Frischluftleitung angeschlossen ist.

Bei einer aus der FR-A-2 344 795 bekannten Lüftungs- und Heizeinrichtung für ein Miethaus wird zum Zwecke einer besseren Wärmeausnutzung das Heizgas der Kessel mit zusätzlicher Luft aus dem Heizungsraum mittels eines Ventilators über Rohrleitungen in den Außenfassaden zu den einzelnen Etagen geführt, wo diese Rohrleitungen jeweils in Verbindung mit der Frischluftzufuhr dienenden Rohrleitungen in der Art eines Wärmeaustauschers verbunden sind und eine Frischlufterwärmung stattfindet. Um außerhalb der Heizperiode ohne Beheizung der Etagen durch Verbrennungsluft eine allgemeine Brauchwassererwärmung zu ermöglichen, ist in der Abgasleitung zwischen den Kesseln und dem Ventilator ein von kaltem Brauchwasser durchströmter Wärmetauscher angeordnet, der das Gemisch aus Verbrennungsgas und Raumluft entsprechend abkühlt und das Brauchwasser vorwärmt. Diese bekannte Lüftungs- und Heizeinrichtung führt zwar zu einer Abkühlung der Abgase auf eine Temperatur, bei der die Etagen nicht durch Abgaswärme beheizt werden, erlaubt jedoch keine Abkühlung der Frischluft für Klimatisierungszwecke. Sowohl die boilerartigen Kessel wie auch das der Abgasleitung zugeordnete Rohrsystem lassen eine Abkühlung der Abgase bis unter ihren Taupunkt praktisch nicht zu.

Die Erfindung befaßt sich mit der Aufgabe, eine solche Lüftungs- und Heizeinrichtung durch Verwendung der bis weit unter den Taupunkt abgekühlten Abgase für Klimatisierungszwecke nutzbar zu machen. Erreicht wird dies erfindungsgemäß dadurch, daß sämtliche Wärmetauscher aus keramischem Werkstoff bestehen, die Frischluftleitung mit einem Frischluft-Gebläse versehen ist und die Heizgase bis unter den Taupunkt abgekühlt werden.

Durch die Verwendung von Wärmetauschern aus keramischem Werkstoff zu Erwärmung von Heizwasser und/oder Brauchwasser ist eine Abkühlung der Heizgase des Brenners bis unter den Taupunkt-möglich. Das bis unter den Taupunkt abgekühlte Abgas gestattet in einfacher Weise eine Klimatisierung des Einzelraumes, indem die dem Einzelraum durch ein Frischluft-Gebläse zugeführte Frischluft an heißen Tagen abgekühlt und an kalten Tagen aufgeheizt wird. Bei der Erwärmung kälterer Frischluft durch die vom Abgas abgegebene Wärme wird einerseits zusätzlich die im Abgas freigesetzte Kondensationswärme nutzbar gemacht, und andererseits wird gegenüber dem Abgas wärmere Frischluft abgekühlt, wobei die vom Abgas aufgenommene Wärme der Frischluft entzogen wird. Außerdem wird durch die erfindungsgemäß vorgesehene Werkstoffwahl (Keramik) verhindert, daß die aggressiven, nassen Abgase die Wärmetauscher zerstören.

Die Zufuhr von Frischluft kann auf einfache Art und Weise durch eine in der Frischluftleitung vor dem Frischluft-Gebläse angeordnete Drosselklappe gesteuert oder geregelt werden. Weiterhin besteht die Möglichkeit, die Frischluftleitung im Bereich zwischen der Drosselklappe und dem Frischluft-Gebläse mit einer oder mehreren Bypass-Öffnungen zu versehen, durch welche Raumluft angesaugt und mit der abgekühlten Frischluft vermischt wird; hierdurch wird vermieden, daß stark unterkühlte Frischluft an einer Stelle in den Raum einströmt.

Die Raumluft befindet sich ständig im Austausch, indem die Heizeinrichtung dem Einzelraum ständig Verbrennungsluft entnimmt und klimatisierte Frischluft eingeführt wird. Die Abführung von Raumluft läßt sich dadurch verstärken, daß die Abgasleitung zwischen den Wärmeaustauschern und dem Abgas-Gebläse mit einer Bypass-Öffnung versehen ist.

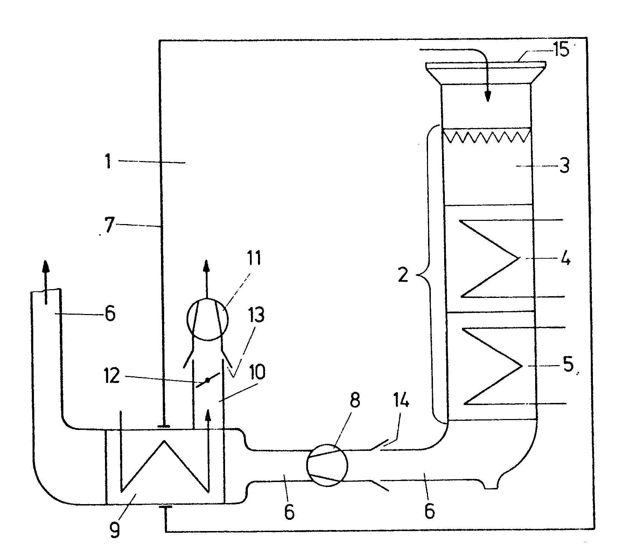

Ein Ausführungsbeispiel der Erfindung ist in der Zeichnung dargestellt.

Einem Einzelraum 1 o. dgl. ist eine Heizeinrichtung 2 zugeordnet, die im wesentlichen aus einer Brenner- und Brennkammereinheit 3 und zwei Wärmeaustauschern 4, 5 besteht, von denen der erste vom Heizwasser einer Heizwasseranlage und der zweite von Brauchwasser durchflossen wird. Der Brenner wird mit gasförmigem oder flüssigem Brennstoff beheizt, und das in der Brennkammer gebildete Heißgas tritt in den ersten Wärmeaustauscher 4 mit einer Temperatur von über 1000° C ein und durchströmt diesen sowie den Wärmeaustauscher 5. Durch die beiden Wärmeaustauscher 4, 5 wird das Heißgas bis unter den Taupunkt abgekühlt. Das im Wärmeaustauscher 5 abgeschiedene Kondensatwasser wird über eine nicht dargestellte Ableitung abgeführt. Die keramischen Wärmeaustauscher 4, 5 weisen eine Vielzahl parallel liegender, schlitzförmiger Strömungskanäle auf, die von dem Heißgas sowie von dem zu erwärmenden Heizwasser bzw. Brauchwasser durchströmt werden. Das von den Wärmeaustauschern bis unter den Taupunkt abgekühlte Heißgas wird mittels einer durch eine Außenwand 7 geführte und mit einem Abgas-Gebläse 8 versehene Abgasleitung 6 ins Freie geführt.

In der Abgasleitung 6 ist ein keramischer Frischluft-Wärmeaustauscher 9 angeordnet, der ähnlich wie die Wärmeaustauscher 4, 5 aufgebaut ist und einerseits von dem unter den Taupunkt abgekühlten Abgas und andererseits von Frischluft durchströmt wird. Auf der Raumseite befindet sich eine Frischluftleitung 10, durch welche die Frischluft mittels eines Frischluft-Gebläses 11 aus dem Freien angesaugt wird und dabei den Frischluft-Wärmeaustauscher 9 durchströmt. In der Frischluftleitung 10 ist weiterhin eine Drosselklappe 12 angeordnet, mit deren Hilfe die Frischluftmenge einstellbar ist. Außerdem sind zwischen der Drosselklappe 12 und dem Frischluft-Gebläse 11 in der Frischluftleitung 10 ein oder mehrere Bypass-Öffnungen 13 vorgesehen, durch welche Luft aus dem Einzelraum 1 angesaugt wird. Ähnliche Bypass-Öffnungen 14 können auch zwischen dem Wärmeaustauscher 5 und dem Abgas-Gebläse 8 in der Abgasleitung 6 angeordnet sein.

Bei Betrieb der Heizeinrichtung 2 wird dem Einzelraum 1 Raumluft als Verbrennungsluft entnommen. Nach Verlassen der Wärmeaustauscher 4, 5 und nach Beimischen von Raumluft an der bzw. den Bypass-Öffnungen 14 wird das weit unter den Taupunkt abgekühlte Abgas vom Abgas-Gebläse 8 über die Abgasleitung 6 durch den Frischluft-Wärmeaustauscher 9 und das außen liegende Abgasrohr 6 in das Freie geleitet. Frischluft wird im Gegenstrom durch den Frischluft-Wärmeaustauscher 9 mittels Frischluft-Gebläses 11 in den Einzelraum 1 geleitet. Dabei kann an einem heißen Tag mit Außentemperaturen, die um fünf oder mehr Celsiusgrade höher liegen als die Abgastemperatur, in der Abgasleitung 6 die Frischluft um drei bis fünf oder mehr Celsiusgrade abgekühlt in den Einzelraum 1 gegeben werden. Durch Zumischung von Raumluft über die Bypass-Öffnungen 13 wird vermieden, daß die vom Frischluft-Gebläse 11 in den Einzelraum 1 geförderte Luft zu stark unterkühlt an einer Stelle einströmt. An einem kalten Tag, bei dem die Außentemperatur niedriger als im Einzelraum 1 ist, ist die Temperatur in der Abgasleitung 6 und fünf oder mehr Celsiusgrade wärmer, so daß die aus dem Freien eintretende Frischluft im Frischluft-Wärmeaustauscher um vier oder mehr Celsiusgrade aufgewärmt werden wird.

Es hat sich gezeigt, daß bei einer Heizeinrichtung der genannten Art, die beispielsweise zum Beheizen einer kleinen Wohnung benutzt wird und die dort in einem sogenannten Küchenzentrum untergebracht sein kann, die austretende Abgasmenge aus der Heizeinrichtung ausreichend groß ist, um in der Küche gleichzeitig die ständige Lufterneuerung für die in der Küche arbeitenden Personen und auch die Klimatisierung herbeizuführen, ähnlich wie ein dafür bisher separat benutztes Raumklimagerät. Mit der erfindungsgemäßen Heizeinrichtung für Frischluftklimatisierung durch Abgase kann der für die Klimatisierung benötigte Aufwand im Vergleich zu einem äquivalenten Klimagerät deutlich geringer gehalten werden, und es entsteht auch ein kleinerer Raumbedarf als bei den separaten Raumklimageräten. Über die Drosselklappe 12 in der Frischluftleitung 10 vor dem Frischluft-Gebläse 11 kann die in den Einzelraum 1 eingegebene Menge zwischen einem Höchstwert bei geöffneter Drosselklappe und bei minimalem Wert bei geschlossener Drosselklappe auf die jeweiligen atmosphärischen Temperaturverhältnisse bezüglich der konstant zu haltenden Temperatur im Einzelraum 1 eingestellt werden. Durch die Verwendung von keramischem Werkstoff für den Frischluft-Wärmeaustauscher 9 wird insbesondere bei Frischlufterwärmung an kalten Tagen erreicht, daß die Frischluft-Wärmeaustauscher 9 stattfindende Kondensation von Abgas-Verbrennungswasserdampf, insbesondere bei Verbrennung schwefelhaltiger Brennstoffe keine materialschädigende Auswirkung hat. Der für den Antrieb des Frischluft-Gebläses 11 erforderliche Strombedarf liegt um etwa $1/5$ bis $1/10$ niedriger als die für die Frischluftklimatisierung an die Frischluft übertragene oder von der Frischluft entnommene Wärmeleistung. Von besonderem Vorteil ist es, wenn die Heizeinrichtung kontinuierlich, d. h. ständig betrieben wird; dann wird eine ebenso kontinuierliche Raumklimatisierung erreicht. Bei Betriebssituationen, bei denen die Heizeinrichtung 2 abgeschaltet ist, kann mit der erfindungsgemäßen Einrichtung auch bei nur eingeschaltetem Frischluft-Gebläse 11 und/oder Abgas-Gebläse 8 der Einzelraum 1 ständig belüftet werden.

Unangenehme Küchendünste werden sowohl bei eingeschalteter oder abgeschalteter Heizungsanlage durch die Heizeinrichtung 2 am Eintritt 15 der Heizeinrichtung angesaugt, wenn dies im zu klimatisierenden Einzelraum 1, beispielsweise in einem Beistellschrank, neben dem Kochherd betrieben wird. Eine Dunstabzugshaube ist dann nicht mehr nötig.

**Patentansprüche**

1. Lüftungs- und Heizeinrichtung für Einzelräume (1) o. dgl., bestehend aus einem mit gasförmigen oder flüssigen Brennstoffen beheizten Brenner (3) und ein oder mehreren von Heizwasser und/oder Brauchwasser durchflossenen Wärmetauschern (4, 5), wobei die Heißgase des Brenners (3) über eine mit einem Abgas-Gebläse (8) versehene Abgasleitung (6) ins Freie geführt werden, und in der Abgasleitung (6) hinter den Wärmeaustauschern (4, 5) ein Frischluft-Wärmeaustauscher (9) angeordnet ist, an den eine, in den Einzelraum (1) mündende Frischluftleitung (10) angeschlossen ist, dadurch gekennzeichnet, daß sämtliche Wärmetauscher (4, 5, 9) aus keramischem Werkstoff bestehen, die Frischluftleitung (10) mit einem Frischluft-Gebläse (11) versehen ist und die Heizgase bis unter den Taupunkt abgekühlt werden.

2. Lüftungs- und Heizeinrichtung nach Anspruch 1, dadurch gekennzeichnet, daß in der Frischluftleitung (10) vor dem Frischluft-Gebläse (11) eine Drosselklappe (12) angeordnet ist.

3. Lüftungs- und Heizeinrichtung nach Anspruch 2, dadurch gekennzeichnet, daß die Frischluftleitung (10) zwischen der Drosselklappe (12) und dem Frischluft-Gebläse (11) mit einer Bypass-Öffnung (13) versehen ist.

4. Lüftungs- und Heizeinrichtung nach einem der Ansprüche 1 bis 3, dadurch gekennzeichnet, daß die Abgasleitung (6) zwischen den Wärmetauschern (4, 5) und dem Abgas-Gebläse (8) mit einer Bypass-Öffnung (14) versehen ist.

## Claims

1. A ventilation and heating device for single rooms (1) or the like, consisting of a burner (3) fired by gaseous or liquid fuels, and one or more heat-exchangers (4, 5) having heating water and/or service water flowing therethrough, the hot gases from the burner (3) being discharged to atmosphere via a discharge conduit (6) provided with a waste gas blower (8), a fresh-air heat-exchanger (9) being disposed in the waste gas conduit (6) behind the heat-exchangers (4, 5) and having connected thereto a fresh-air conduit (10) leading into the individual room (1), characterized in that all the heat-exchangers (4, 5, 9) consists of ceramic material, the fresh-air conduit (10) is provided with a fresh-air fan (11), and the heating gases are cooled to below the dew point.

2. A ventilation and heating device according to claim 1, characterized in that the fresh-air conduit (10) contains a throttle valve (12) before the fresh-air fan (11).

3. A ventilation and heating device according to claim 2, characterized in that the fresh-air conduit (10) contains a bypass-opening (13) between the throttle valve (12) and the fresh-air fan (11).

4. A ventilation and heating device according to any one of claims 1 to 3, characterized in that the waste gas conduit (6) is provided with a bypass opening (14) between the heat-exchangers (4, 5) and the waste gas fan (8).

## Revendications

1. Dispositif de ventilation et de chauffage pour des pièces individuelles (1) et analogues, constitué d'un brûleur (3) chauffé par des combustibles gazeux ou liquides et d'un ou de plusieurs échangeurs de chaleur (4, 5) parcourus par de l'eau chaude et/ou par de l'eau sanitaire, les gaz chauds du brûleur (3) étant envoyés à l'air libre par l'intermédiaire d'un conduit pour le gaz résiduaire (6) muni d'un ventilateur pour le gaz résiduaire (8) et dans le conduit pour le gaz résiduaire (6) est disposé, en aval des échangeurs de chaleur (4, 5), un échangeur de chaleur pour l'air frais (9), auquel est raccordé un conduit pour l'air frais (10) débouchant dans la pièce individuelle (1), caractérisé en ce que l'ensemble des échangeurs de chaleur (4, 5, 9) est en matériau céramique, le conduit pour l'air frais (10) est muni d'un ventilateur pour l'air frais (11) et les gaz chauds sont refroidis jusqu'en-dessous du point de rosée.

2. Dispositif de ventilation et de chauffage suivant la revendication 1, caractérisé en ce que, dans le conduit pour l'air frais (10), une vanne papillon (12) est montée en amont du ventilateur pour l'air frais (11).

3. Dispositif de ventilation et de chauffage suivant la revendication 2, caractérisé en ce que le conduit pour l'air frais (10) est muni d'une ouverture de dérivation (13) entre la vanne papillon (12) et le ventilateur pour l'air frais (11).

4. Dispositif de ventilation et de chauffage suivant l'une des revendications 1 à 3, caractérisé en ce que le conduit pour le gaz résiduaire (6) est muni, entre les échangeurs de chaleur (4, 5) et le ventilateur pour le gaz résiduaire (8), d'une ouverture de dérivation (14).